Europäisches Patentamt

European Patent Office

Office européen des brevets

(11) Veröffentlichungsnummer: **0 499 899 A1**

# EUROPÄISCHE PATENTANMELDUNG

(21) Anmeldenummer: **92102031.9**

(51) Int. Cl.5: **B65G 47/30**

(22) Anmeldetag: **07.02.92**

(30) Priorität: **21.02.91 DE 9102036 U**

(43) Veröffentlichungstag der Anmeldung:
**26.08.92 Patentblatt 92/35**

(84) Benannte Vertragsstaaten:
**DE FR IT**

(71) Anmelder: **FIRMA EKKEHARD KEMPF GmbH**
**Kutschenweg 10**
**W-7080 Aalen-Unterkochen(DE)**

(72) Erfinder: **Kempf, Ekkehard**
**Fichtestrasse 59**
**W-7080 Aalen(DE)**
Erfinder: **Deigendesch, Harald**
**Albstrasse 69**
**W-7080 Aalen-Waldhausen(DE)**
Erfinder: **Feil, Peter**
**Heulenbergweg 28**
**W-7080 Aalen-Unterkochen(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

(54) **Vorrichtung zum Vereinzeln von paketweise zusammengestelltem Stückgut.**

(57) Die Erfindung betrifft eine Vorrichtung zum Vereinzeln von paketweise zusammengestelltem Stückgut (24) mit variablem Querschnitt und unterschiedlichen Eingangslängen mit einer ersten Fördereinrichtung, die das Stückgut (24) aus einer Zuführstation (18) in Richtung einer Abgabestation (20) transportiert, und mit einer für den Weitertransport des Stückgutes (24) zur Abgabestation (20) vorgesehenen zweiten Fördereinrichtung, mittels der in einem Abstand zwischen dem Stückgut (24) und der ersten Fördereinrichtung eingreifbar ist, die eine Anlagefläche (36) für das Stückgut (24) aufweist. Gemäß der Erfindung ist die Anlagefläche (36) Teil eines rechenartigen Anlageteiles (34), das zur Bildung des Abstandes Zwischenräume (38) aufweist, die zumindest teilweise für den Eingriff eines Eingreifteiles (44) der zweiten Fördereinrichtung vorgesehen sind. Mit der erfindungsgemäßen Vorrichtung läßt sich auch ein Paket an Stückgut mit unterschiedlichsten Querschnitten und Eingangslängen vereinzeln.

Fig. 3

Die Erfindung betrifft eine Vorrichtung zum Vereinzeln von paketweise zusammengestelltem Stückgut mit variablem Querschnitt und unterschiedlichen Eingangslängen mit einer ersten Fördereinrichtung, die das Stückgut aus einer Zuführstation in Richtung einer Abgabestation transportiert, und mit einer für den Weitertransport des Stückgutes zur Abgabestation vorgesehenen zweiten Fördereinrichtung, mittels der in einen Abstand zwischen dem Stückgut und der ersten Fördereinrichtung eingreifbar ist, die eine Anlagefläche für das Stückgut aufweist.

Eine gattungsgleiche Vorrichtung ist durch die US-PS 4,077,524 bekannt. Diese bekannte Vorrichtung dient zum Vereinzeln von Holzbrettern einer vorgebbaren Länge, die mittels einer ersten Fördereinrichtung von der Zuführstation entnommen werden. Diese erste Fördereinrichtung weist mindestens ein Paar hintereinander angeordnete, einen Abstand voneinander aufweisende Endlosketten auf, an denen schwenkbar angelenkte Mitnehmerelemente vorhanden sind, die jeweils eine Anlagefläche für das zu transportierende Stückgut aufweisen. Der Abstand der Endlosketten voneinander wird in Abhängigkeit von der Länge der zu transportierenden Holzbretter gewählt und fest eingestellt. Nach Übernahme des jeweiligen Holzbrettes durch die Anlageflächen der in einer Linie hintereinander angeordneten Mitnehmerelemente greift eine zweite Fördereinrichtung in Form einer Endlosfördereinrichtung mit Vorsprüngen in die Abstände zwischen den Mitnehmerelementen ein und übernimmt damit das jeweilige Holzbrett für den Weitertransport von der ersten Fördereinrichtung. Mit dieser bekannten Vorrichtung lassen sich mithin nur paketweise zusammengestellte Holzbretter einer vorgebbaren Länge in einem Arbeitszyklus transportieren. Aufgrund des komplizierten Aufbaues der Vorrichtungen kann es zu Störungen im Betriebsablauf kommen.

Bei einer anderen gattungsgemäßen Vorrichtung gemäß der DE-OS 29 37 115 weist das zu vereinzelnde Stückgut in Form von rechteckigen und länglichen Gegenständen abgeschrägte Längsränder auf. In den Abstand zwischen zwei einander benachbart gegenüberliegenden abgeschrägten Längsrändern greift die erste Fördereinrichtung mit einem jeweils hierfür vorgesehenen Mitnehmerelement ein, wobei das jeweilige Mitnehmerelement schwenkbar auf einer drehbaren Kreisscheibe der ersten Fördereinrichtung angelenkt ist. Mit den eingreifenden Mitnehmerelementen wird das paketweise zusammengestellte Stückgut unter Bildung eines axialen Abstandes voneinander derart vereinzelt, daß Mitnehmerelemente einer zweiten Fördereinrichtung in Form eines Schleppförderers in diese Abstände eingreifen und den Weitertransport übernehmen. Die bekannte Vorrichtung ist mithin auf das Vereinzeln von Stückgut mit abgeschrägten Rändern beschränkt.

Auf dem Markt sind auch gattungsfremde Vorrichtungen erhältlich mit nur einer Fördereinrichtung, die das Stückgut aus einer Zuführstation in Richtung einer Abgabestation transportieren. Dahingehende Vorrichtungen sind Teil von sog. Keilzinkenautomaten, die dazu dienen, keilgezinkte Bretter aus Holz zu deren Verbindung miteinander längszuverpressen. Die in diesem Fall das Stückgut bildenden Bretter sind zu Paketen zusammengestellt und weisen, bevor sie in die Zuführstation kommen, endseitig bereits keilgezinkte Stoßstellen auf. Die angesprochenen Pakete können aus Brettern eines Querschnittes und einer Eingangslänge bestehen; ein Paket kann aber auch aus unterschiedlich langen Brettern und/oder unterschiedlichen Querschnitten gebildet sein. Nach Durchlaufen der Vorrichtung, also nach Verlassen der Abgabestation, sind die Bretter dann hintereinander längs einer Linie zu einem durchgehenden Strang zusammengestellt, bei dem die keilgezinkten Stoßstellen für das sich anschließende Längsverpressen aneinanderliegen.

Bei dieser bekannten Art der Vorrichtung hat die Fördereinrichtung alle in der Zuführstation zu einem Paket zusammengestellten Bretter gemeinsam zu einer Abgabestation zu verfahren und dort nacheinander, also taktweise die Bretter an diese Abgabestation abzugeben, so daß die bekannte Fördereinrichtung unmittelbar an der Abgabestation selbst das Vereinzeln der Bretter übernimmt. Nach Abschluß des Vereinzelungsvorganges fährt bei der bekannten Vorrichtung die Fördereinrichtung ganz zurück in ihre Ausgangsstellung in der Zuführstation und übernimmt dort ein weiteres, neu zusammengestelltes Paket an Brettern für den sich anschließenden Vereinzelungsvorgang. Diese bekannte Vorrichtung arbeitet langsam und demgemäß auch der gesamte Keilzinkenautomat, weil der Nachschub an vereinzelten Brettern zu deren Längsverpressung über einen Zeitraum unterbrochen ist, bei dem die Fördereinrichtung für einen neuen Abholvorgang in ihre Ausgangsstellung zurückkehrt.

Ausgehend von diesem Stand der Technik liegt der Erfindung die Aufgabe zugrunde, diese bekannten Vorrichtungen derart weiterzuverbessern, daß mit Sicherheit ein störungsfreier Betrieb gewährleistet ist, daß jede Art von paketweise zusammengestelltem Stückgut vereinzelbar ist und daß es zu einer Leistungssteigerung kommt. Diese Aufgabe löst eine Vorrichtung mit den Merkmalen des Anspruches 1.

Dadurch, daß bei der erfindungsgemäßen Vorrichtung die für den Transport des Stückgutes vorgesehene Anlagefläche der ersten Fördereinrichtung Teil eines rechenartigen Anlageteiles ist, das zur Bildung des Abstandes Zwischenräume aufweist, die zumindest teilweise für den Eingriff eines Eingreifteiles der zweiten Fördereinrichtung vorgesehen sind, bildet das rechenartige Anlageteil insgesamt eine groß dimensionierte Anlagefläche für das zu transportierende Stückgut aus, so daß eine sichere Mitnahme gewährleistet ist, die einen weitgehend störungsfreien Betrieb der gesamten Vorrichtung gewährleistet. Ferner ist mit der erfindungsgemäßen Vorrichtung das Vereinzeln von Stückgut mit beliebigen Querschnittsformen und Eingangslängen eines Paketes möglich. Durch die Verwendung zweier Fördereinrichtungen kann die erste Fördereinrichtung für einen neuen Abholvorgang bereits zurück in die Zuführstation verfahren werden, während die zweite Fördereinrichtung den Vereinzelungsvorgang an der Abgabestation übernimmt. Die erfindungsgemäße Vorrichtung kann also bereits in der Zuführstation mit einem neuen Paket an Stückgut beladen werden, während der Vereinzelungsvorgang noch im Gange ist. Aufgrund dieser Arbeitsteilung von erster und zweiter Fördereinrichtung, die dank des rechenartigen Anlageteiles möglich ist, kommt es zu einer kontinuierlichen Abgabe an zu vereinzelnden Brettern in der Abgabestation, was zu Zeitersparnissen und insgesamt zu einer Leistungssteigerung auch bei dem sich anschließenden Keilzinkenautomaten führt.

Der Einsatz der erfindungsgemäßen Vorrichtung für die Weiterverarbeitung von Brettern mittels Keilzinkenautomaten stellt nur einen möglichen Anwendungsfall dar. Es kann aber auch jedes andere zu Paketen zusammenstellbare Stückgut mit der erfindungsgemäßen Vorrichtung vereinzelt werden.

Vorzugsweise ist die erste Fördereinrichtung aus einem verfahrbaren ersten Schieber gebildet. Als Schieber gemäß der Erfindung sind auch Leisten anzusehen, die stegartig an einem Endlosförderer anzubringen sind, beispielsweise einem Kettenförderer oder einem Endlosband, die dann jeweils die erste Fördereinrichtung bilden. Dahingehende Schieber sind sicher und störungsfrei im Betrieb.

Bei einer bevorzugten Ausführungsform der erfindungsgemäßen Vorrichtung ist die zweite Fördereinrichtung aus einem verfahrbaren zweiten Schieber gebildet, der zwischen dem ersten Schieber und der Abgabestation verfahrbar ist und das Eingreifteil ist quer zur Verfahrrichtung des zweiten Schiebers bewegbar. Auch diese zweite Fördereinrichtung kann aus einem Endlosförderer gebildet sein, bei dem vorstehende Stege den zweiten Schieber ausbilden.

Bei einer weiteren bevorzugten Ausführungsform der erfindungsgemäßen Vorrichtung ist das Eingreifteil des zweiten Schiebers rechenartig ausgebildet und greift zur Übernahme des Stückgutes in das rechenartige Anlageteil des ersten Schiebers ein. Durch die rechenartige Ausbildung von Eingreif- und Anlageteil bilden die Ausnehmungen des jeweils einen rechenartigen Teiles eine Führung für die eingreifenden Zinken des jeweils anderen rechenartigen Teiles, so daß die gegeneinander verfahrbaren Teile ineinandergeführt sind, was den störungsfreien Betrieb der Vorrichtung begünstigt.

Vorzugsweise sind die beiden Schieber entlang einer gemeinsamen Führung verfahrbar, die parallel zur Transportrichtung des Stückgutes innerhalb der Vorrichtung verläuft. Das Verfahren der beiden Schieber entlang einer gemeinsamen Führung stellt gegenüber den angesprochenen Endlosförderern und gegenüber den bekannten Vorrichtungen eine kostengünstige Alternative dar.

Bei einer weiteren bevorzugten Ausführungsform der erfindungsgemäßen Vorrichtung ist zwischen der Zuführ- und der Abgabestation ein quer zur Transportrichtung des Stückgutes ein- und ausfahrbares Führungsteil vorgesehen. Dieses Führungsteil erlaubt im Bereich der Zuführstation, daß das zugeführte Stückgut zu einem Paket zusammengestellt erhalten bleibt und nicht auseinanderfällt.

Vorzugsweise ist zwischen dem Führungsteil und der Abgabestation eine Zwischenpuffereinrichtung für das Stückgut vorgesehen. Diese Zwischenpuffereinrichtung erleichter die Handhabung des Stückgutes beim Vereinzeln mittels der zweiten Fördereinrichtung.

Bei einer besonders bevorzugten Ausführungsform der erfindungsgemäßen Vorrichtung sind die Zuführ- und die Abgabestation jeweils aus einer Längsfördereinrichtung gebildet, die das Stückgut quer zu seiner Transportrichtung innerhalb der Vorrichtung in diese paketweise hinein- bzw. einzeln herausfördern. Durch diese Anordnung von zwei Längsförderern und einem Querförderer innerhalb der Vorrichtung wird ein besonders kompakter, platzsparender Aufbau derselben erreicht.

Im folgenden wird die erfindungsgemäße Vorrichtung in prinzipieller Darstellung gemäß der Zeichnung näher erläutert.

Es zeigen:

Fig. 1 bis 3    in Seitenansicht die erfindungsgemäße Vorrichtung in verschiedenen Arbeitsstellungen;

Fig. 4 und 5    eine Draufsicht auf die erfindungsgemäße Vorrichtung, wobei die Fig.4 die Draufsicht gemäß der Fig.2 darstellt.

Die erfindungsgemäße Vorrichtung weist ein kastenartiges Maschinengestell 10 auf, das auf einem Boden aufständerbar ist. Die Vorrichtung weist ferner eine erste und eine zweite Fördereinrichtung in Form eines ersten Schiebers 12 bzw. eines zweiten Schiebers 14 auf.

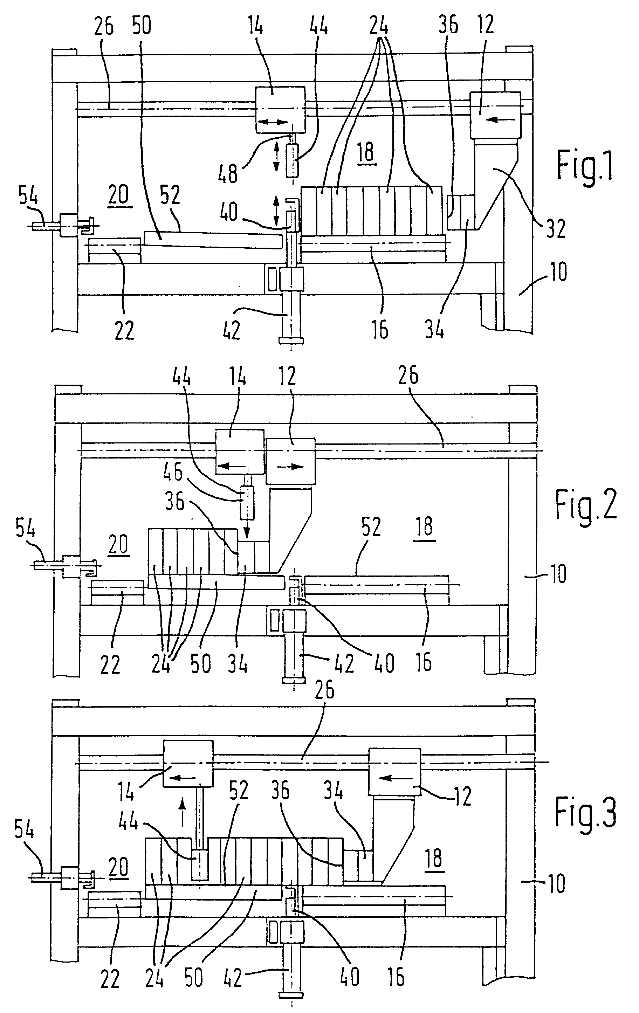

Zum Beschicken der Vorrichtung weist diese eine Längsfördereinrichtung in Form eines Zuführ-Transportbandes 16 auf, das horizontal und senkrecht zur Zeichenebene verlaufend (nicht dargestellt) in der Zuführstation 18 innerhalb der Vorrichtung endet. Neben der Zuführstation 18 innerhalb der Vorrichtung ist eine Abgabestation 20 vorhanden, die eine Längsfördereinrichtung in Form eines Abgabe-Transportbandes 22 aufweist, das horizontal und senkrecht zur Zeichenebene verlaufend (nicht dargestellt) aus der Vorrichtung herausführt. Im vorliegenden Fall soll das Zuführ-Transportband 16 von Betrachter der Fig.1 bis 3 aus gesehen in Richtung auf die Zeichenebene zulaufen und das Abgabe-Transportband 22 dem Betrachter abgewandt aus der rückseitigen Zeichenebene herauslaufen. Die beiden Transportbänder 16 und 22 können mit umgekehrtem Antriebssinn aber auch auf ein und derselben Seite der Zeichenebene angeordnet sein, so daß die Zuführung und die Abgabe des Stückgutes auf ein und derselben Seite der Vorrichtung erfolgt.

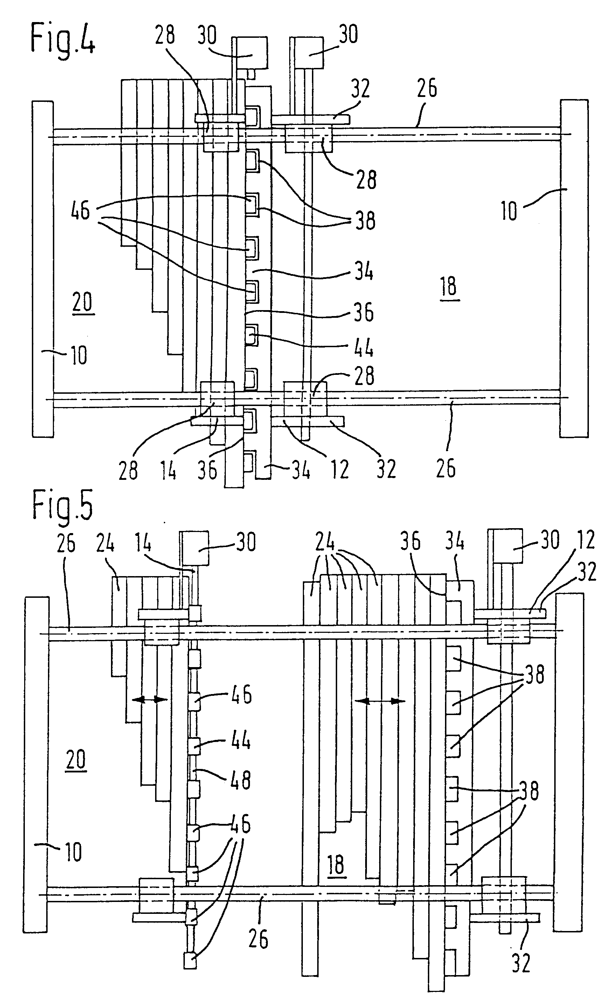

In Fig.1 ist ein Paket von zusammengestelltem Stückgut aus neun nebeneinanderliegenden Brettern 24 dargestellt, die unterschiedliche Eingangslängen (Fig.4,5) aufweisen, deren variabler Querschnitt aber gleich ist. Die mit ihren Längsseiten aneinanderliegenden Bretter 24 sind in der in Fig.1 stirnseitig dargestellten Paketform mittels des Zuführ-Transportbandes 16 in die Zuführstation 18 der Vorrichtung verfahren worden. Die Bretter 24 sind für den später sich anschließenden Vorgang des Längsverpressens an ihren stirnseitigen Enden bereits keilgezinkt (nicht dargestellt).

Die beiden dem Transport des Stückgutes in Form der Bretter 24 zur Abgabestation 20 hin dienenden Schieber 12 und 14 sind entlang einer gemeinsamen Führung verfahrbar, die parallel zur Transportrichtung der Bretter 24 innerhalb der Vorrichtung verläuft und die zwei endseitig im Maschinengestell 10 gelagerte Zahnstangen 26 aufweist, die in einer horizontalen Ebene angeordnet sind. Mit diesen Zahnstangen 26 im Eingriff sind Zahnräder 28, die paarweise einem Schieber 12 bzw. 14 zugeordnet den Antrieb des jeweiligen Schiebers gewährleisten. Als Antriebsquelle dient hierbei für jeden Schieber 12 bzw. 14 ein Hydraulikmotor 30 (Fig.4,5), der in üblicher und daher nicht näher beschriebener Art und Weise eines der beiden Zahnräder eines jeden Schiebers zum Verfahren desselben antreibt. Die beiden Hydraulikmotoren 30 sind unabhängig voneinander betätigbar und können zur Automatisierung der gesamten erfindungsgemäßen Vorrichtung von einer Rechnereinheit (nicht dargestellt) angesteuert werden.

Der erste Schieber 12 weist endseitig jeweils eine Seitenwange 32 auf, deren Abstand voneinander größer ist als der Abstand der beiden Zahnstangen 26 voneinander und die mittels eines rechenartigen Anlageteiles 34 (Fig.4,5) miteinander verbunden sind. Diese Anlageteile 34 stehen in horizontaler Richtung über die beiden Seitenwangen 32 hervor und weisen eine Anlagefläche 36 auf, die in Anlage mit dem Stückgut bringbar ist und in die zur Bildung eines Abstandes mit dem Stückgut jeweils eine rechteckförmige Nut 38 in vorgebbaren Abständen voneinander eingelassen ist. Diese die Zwischenräume bildenden Nuten 38 sind in einer Linie hintereinander angeordnet, die senkrecht zur Verfahrrichtung der beiden Schieber 12,14 ist. Damit beim Einfahren des Paketes in die Zuführstation 18 die einzelnen Bretter 24 nicht auseinanderfallen, ist ein Führungsteil 40 vorgesehen, das mittels eines hydraulischen Antriebes 42 ein- und ausfahren kann.

Der zweite Schieber 14, der von seinem Antrieb her vergleichbar dem ersten Schieber 12 aufgebaut ist, weist darüberhinaus ein quer zu seiner Verfahrrichtung verfahrbares Eingreifteil 44 auf, das für einen Eingriff in die jeweiligen, durch das Anlageteil 34 gebildeten Abstände vorgesehen ist.

Dieser Eingreifteil 44 ist ebenso wie das Anlageteil 34 rechenartig ausgebildet und seine Mitnehmer oder Zinken 46 sind in vorgebbaren Abständen voneinander längs eines Querstabes 48 (Fig.5) des zweiten Schiebers 14 angeordnet und mittels eines hydraulischen Antriebes (nicht dargestellt), wie in Fig.1 mit Pfeilen angedeutet, auf und ab bewegbar.

Zum besseren Verständnis der erfindungsgemäßen Vorrichtung wird im folgenden deren Funktion anhand der Figuren näher beschrieben. Befindet sich das Paket mit den Brettern 24 in der Zuführstation 18 gemäß Fig.1, wird mittels des hydraulischen Antriebes 42 das Führungsteil 40 nach unten in seine in Fig.2 dargestellte Endstellung verfahren. In dieser, in der Fig.2 dargestellten Stellung schließt die Oberseite des Führungsteiles 40 bündig mit der Oberseite des Zuführ-Transportbandes 16 sowie mit der Oberseite einer Zwischenpuffereinrichtung in Form eines Tisches 50 ab, so daß der Tisch 50, das Führungsteil 40 sowie das Transportband 16 eine ebene, im wesentlichen horizontal verlaufende Transportfläche 52 ausbilden.

Sobald das Führungsteil 40 in seiner in der Fig.2 dargestellten Endstellung ist, wird der Antrieb 30 des ersten Schiebers 12 betätigt und der Schieber 12 verfährt von seiner in der Fig.1 dargestellten Ausgangsstellung in der Zuführstation 18 das Paket mit den Brettern 24 vom Betrachter aus gesehen nach links in Richtung auf die Abgabestation 22 zu. Der erste Schieber 12 schiebt also von dem Zuführ-Transportband 16 das Paket auf den danebenliegenden Tisch 50. Von dort aus kann dann der Vereinzelungsvorgang der Bretter 24 zunächst mittels des ersten Schiebers 12 vonstatten gehen. Zur Übernahme des diesbezüglichen Stückgutes, das auf dem Tisch 50 befindlich ist, greift das rechenartig ausgebildete Eingreifteil 44 des zweiten Schiebers 14 von oben her in das rechenartige Anlageteil 34 des ersten Schiebers 12 ein, indem, wie dies der Pfeil in Fig.2 zeigt, der Eingreifteil 44 sich nach unten bewegt.

Mit dem Eingriff ist ein feststehender Anlagebereich für die Bretter 24 gebildet und der erste Schieber 12 kann von seiner in der Fig.2 dargestellten Stellung in Pfeilrichtung nach rechts im seine Ausgangsstellung zurückverfahren werden, wie sie in Fig.1 dargestellt ist. Es kann dann über das Zuführ-Transportband 16 ein neues Paket an Brettern 24 in die Zuführstation 18 verfahren werden, wobei das diesbezügliche Paket auch weniger Bretter diesmal umfassen kann (vgl. Fig.5). Während dieser Rückfahrbewegung des ersten Schiebers 12 stößt dann der zweite Schieber 14, indem er sich in der in Fig.2 dargestellten Pfeilrichtung nach links bewegt, Brett für Brett auf das Abgabe-Transportband 22, das den Abtransport der Bretter zum anschließenden Längsverpressen übernimmt. Zur seitlichen Führung der Bretter 24 auf dem Abgabe-Transportband 22 kann ein verstellbarer Anschlag 54 vorgesehen sein.

Sind nur noch wenige Bretter 24, beispielsweise drei, auf der Oberseite des Tisches 50 übrig und transportiert der erste Schieber 12 bereits ein neues Paket von Brettern 24 (Fig.3) heran, wird das Eingreifteil 44 nach oben in Pfeilrichtung zurückgezogen und der erste Schieber 12 übernimmt solange das Vereinzeln der Bretter 24 an der Abgabestation 20, bis der zweite Schieber 14 wieder seine Übernahmeposition eingenommen hat, wie sie in Fig.2 dargestellt ist und ein neuer Zyklus kann beginnen. Mit der vorliegenden Vorrichtung, die auch für anderes Stückgut Verwendung finden kann, ist also ein kontinuierliches Vereinzeln, sprich Abgabe von Brettern 24 an die Abgabestation 20 möglich.

Der Abstand zwischen dem Stückgut und der ersten Fördereinrichtung im Sinne der Erfindung kann auch durch einen seitlichen Zwischenraum zwischen der ersten Fördereinrichtung und dem Stückgut gebildet sein. Dies wäre der Fall, wenn eine stabartige erste Fördereinrichtung unmittelbar in Anlage mit dem Stückgut bringbar ist.

Der um die diesbezügliche Kontaktstelle liegende Zwischenraum bildet dann den Abstand. Gleiches gilt, wenn mehrere nebeneinander angeordnete stabartige erste Fördereinrichtungen an dem Stückgut angreifen. Die diesbezüglichen Stäbe können hierbei auch aus Arbeitszylindern gebildet sein.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

**Patentansprüche**

1.  Vorrichtung zum Vereinzeln von paketweise zusammengestelltem Stückgut (24) mit variablem Querschnitt und unterschiedlichen Eingangslängen mit einer ersten Fördereinrichtung, die das Stückgut (24) aus einer Zuführstation (18) in Richtung einer Abgabestation (20) transportiert, und mit einer für den Weitertransport des Stückgutes (24) zur Abgabestation vorgesehenen zweiten Fördereinrichtung, mittels der in einen Abstand zwischen dem Stückgut (24) und der ersten Fördereinrichtung eingreifbar ist, die eine Anlagefläche (36) für das Stückgut (24) aufweist, dadurch gekennzeichnet, daß die Anlagefläche (36) Teil eines rechenartigen Anlageteiles (34) ist, das zur Bildung des Abstandes Zwischenräume (38) aufweist, die zumindest teilweise für den Eingriff eines Eingreifteiles (44) der zweiten Fördereinrichtung vorgesehen sind.

2.  Vorrichtung nach Anspruch 1, dadurch gekennzeichnet, daß die erste Fördereinrichtung aus einem verfahrbaren ersten Schieber (12) gebildet ist.

3.  Vorrichtung nach Anspruch 1 oder 2, dadurch gekennzeichnet, daß die zweite Fördereinrichtung aus einem verfahrbaren zweiten Schieber (14) gebildet ist, der zwischen dem ersten Schieber (12) und der Abgabestation (20) verfahrbar ist, und daß das Eingreifteil (44) quer zur Verfahrrichtung des zweiten Schiebers (14) bewegbar ist.

4.  Vorrichtung nach Anspruch 3, dadurch gekennzeichnet, daß das Eingreifteil (44) des zweiten Schiebers (14) rechenartig ausgebildet ist und zur Übernahme des Stückgutes (24) in das rechenartige Anlageteil (34) des ersten Schiebers (12) eingreift.

5.  Vorrichtung nach Anspruch 3 oder 4, dadurch gekennzeichnet, daß die beiden Schieber (12,14) entlang einer gemeinsamen Führung (26) verfahrbar sind, die parallel zur Transportrichtung des Stückgutes (24) innerhalb der Vorrichtung verläuft.

6.  Vorrichtung nach einem der Ansprüche 1 bis 5, dadurch gekennzeichnet, daß zwischen der Zuführ- und der Abgabestation (18,20) ein quer zur Transportrichtung des Stückgutes (24) ein- und ausfahrbares Führungsteil (40) vorgesehen ist.

7. Vorrichtung nach Anspruch 6, dadurch gekennzeichnet, daß zwischen dem Führungsteil (40) und der Abgabestation (20) eine Zwischenpuffereinrichtung für das Stückgut (24) vorgesehen ist.

8. Vorrichtung nach einem der Ansprüche 1 bis 7, dadurch gekennzeichnet, daß die Zuführ- und Abgabestation (18,20) jeweils aus einer Längsfördereinrichtung (16,22) gebildet sind, die das Stückgut (24) quer zu seiner Transportrichtung innerhalb der Vorrichtung in diese paketweise hinein- bzw. einzeln herausfördern.

Fig.1

Fig.2

Fig.3

**Fig.4**

**Fig.5**

| | EINSCHLÄGIGE DOKUMENTE | | EP 92102031.9 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl⁵)** |
| A | CH - A - 621 529 (SIG SCHWEIZERISCHE INDUSTRIEGESELLSCHAFT) * Fig. 1 * -- | 1 | B 65 G 47/30 |
| A | GB - A - 1 412 700 (CRISPLANT A/S) * Fig. 1 * ---- | 1 | |

**RECHERCHIERTE SACHGEBIETE (Int. Cl⁵)**

B 65 G

Der vorliegende Recherchenbericht wurde für alle Patentansprüche erstellt.

| Recherchenort | Abschlußdatum der Recherche | Prüfer |
|---|---|---|
| WIEN | 13-05-1992 | PISSENBERGER |